# EUROPÄISCHE PATENTSCHRIFT

(11) **EP 2 736 989 B1**
(45) Veröffentlichungstag und Bekanntmachung des Hinweises auf die Patenterteilung: **08.03.2017**
(21) Anmeldenummer: 12743707.7
(22) Anmeldetag: 25.07.2012
(51) Int. Cl.: C09J 5/00, F16B 11/00, B62D 65/00

(54) **GRUPPE VON KRAFTFAHRZEUGEN UND VERFAHREN ZUM HERSTELLEN EINES KRAFTFAHRZEUGS**
GROUP OF MOTOR VEHICLES AND METHOD FOR PRODUCING A MOTOR VEHICLE
GROUPE DE VÉHICULES AUTOMOBILES ET PROCÉDÉ SERVANT À FABRIQUER UN VÉHICULE AUTOMOBILE

(30) Priorität: 29.07.2011 DE 102011080089
(43) Veröffentlichungstag der Anmeldung: 04.06.2014
(73) Patentinhaber: Bayerische Motoren Werke Aktiengesellschaft, 80809 München (DE)
(72) Erfinder: PFLANZ, Gero, 80937 München (DE); BATEREAU, Klaas, 80937 München (DE); MANDLMEIER, Stefan, 85764 Oberschleissheim (DE); SEDLMAIER, Hermann, 93059 Regensburg (DE); HELZEL, Angela, 84036 Landshut (DE); GREITL, Andreas, 84152 Mengkofen (DE)
(86) Internationale Anmeldenummer: PCT/EP2012/064608
(87) Internationale Veröffentlichungsnummer: WO 2013/017507

(56) Entgegenhaltungen:
- DE-A1- 3 323 006
- DE-A1- 10 360 350
- DE-U1- 29 921 458
- US-A1- 2007 035 157
- US-B1- 6 241 304
- HUNTSMAN: "Users Guide to Adhesives", HUNTSMAN ADVANCED MATERIALS GmbH , 18. Juli 2008 (2008-07-18), XP002685443, Gefunden im Internet: URL:http://www.freemansupply.com/datasheet s/adhesivesguide.pdf [gefunden am 2012-10-17]

## Beschreibung

Die vorliegende Erfindung bezieht sich auf eine Gruppe von Kraftfahrzeugen bestehend aus einem ersten Kraftfahrzeug, das eine erste Karosserie mit einem angeklebten ersten Strukturelement aufweist, und einem zweiten Kraftfahrzeug, das eine zweite Karosserie mit einem angeklebten zweiten Strukturelement aufweist. Ferner bezieht sich die vorliegende Erfindung auf ein Verfahren zum Herstellen eines Kraftfahrzeugs, das eine Karosserie mit einem angeklebten Strukturelement aufweist.

Es ist bekannt, Strukturelemente, wie beispielsweise Fahrzeugscheiben, insbesondere Frontscheiben, durch Verklebung fest mit einem Karosserieflansch eines Kraftfahrzeugs zu verbinden. Insbesondere wird bei bekannten Verfahren Klebemittel automatisiert an einen Rand der Frontscheibe aufgetragen und die Frontscheibe dann an den Karosserieflansch geklebt. Eine derartig angeklebte Frontscheibe hat einen erheblichen Anteil an einer Steifigkeit, insbesondere einer Torsionssteifigkeit, einer Kraftfahrzeugkarosserie bzw. dem Kraftfahrzeug insgesamt.

Es ist die Aufgabe der vorliegenden Erfindung, eine Gruppe von Kraftfahrzeugen bestehend zumindest aus einem ersten Kraftfahrzeug und einem zweiten Kraftfahrzeug zu schaffen, wobei die Steifigkeit des ersten Kraftfahrzeugs an die Steifigkeit des zweiten Kraftfahrzeugs mit einfachen Mitteln angenähert ist. Ferner ist es die Aufgabe der vorliegenden Erfindung, ein Verfahren zum Herstellen eines Kraftfahrzeugs zu schaffen, bei dem eine Steifigkeit des Kraftfahrzeugs optimiert ist.

Diese Aufgabe wird durch eine Gruppe von Fahrzeugen mit den Merkmalen von Patentanspruch 1 gelöst. Ferner wird diese Aufgabe durch ein Verfahren mit den Schritten von Patentanspruch 8, 9 oder 10 gelöst.

Die DE 299 21 458 U1 offenbart den Oberbegriff des Anspruchs 1. Insbesondere besteht eine Gruppe von Kraftfahrzeugen gemäß der vorliegenden Erfindung aus einem ersten Kraftfahrzeug und einem zweiten Kraftfahrzeug. Das erste Kraftfahrzeug weist eine Karosserie mit einem angeklebten ersten Strukturelement auf und das zweite Kraftfahrzeug weist eine Karosserie mit einem angeklebten zweiten Strukturelement auf. Die Steifigkeit des ersten Kraftfahrzeugs ohne dem angeklebten ersten Strukturelement unterscheidet sich von der Steifigkeit des zweiten Kraftfahrzeugs ohne dem angeklebten zweiten Strukturelement. Eine Verklebung des ersten Strukturelements ist derart unterschiedlich zu einer Verklebung des zweiten Strukturelements ausgeführt, dass ein Unterschied zwischen der Steifigkeit des ersten Kraftfahrzeugs und der Steifigkeit des zweiten Kraftfahrzeugs verringert ist. Insbesondere ist eine Verklebung des ersten Strukturelements derart unterschiedlich zu einer Verklebung des zweiten Strukturelements ausgeführt, dass ein Unterschied zwischen der Steifigkeit des ersten Kraftfahrzeugs mit dem erfindungsgemäß angeklebten ersten Strukturelement und der Steifigkeit des zweiten Kraftfahrzeugs mit dem erfindungsgemäß angeklebten zweiten Strukturelement im Vergleich mit einer gleichartigen Verklebung, d.h. einer Verklebung ohne dem erfindungsgemäßen Unterschied, des ersten Strukturelements mit dem ersten Kraftfahrzeug und des zweiten Strukturelements mit dem zweiten Kraftfahrzeug verringert ist.

Eine Verklebung des ersten Strukturelements und des zweiten Strukturelements ist also nicht gleich ausgeführt, sondern auf eine Art und Weise unterschiedlich ausgeführt, dass ein Unterschied zwischen der Steifigkeit des ersten Kraftfahrzeugs und der Steifigkeit des zweiten Kraftfahrzeugs geringer als in einem herkömmlichen Fall mit gleicher Verklebung ist. Die Steifigkeit des ersten Kraftfahrzeugs ist damit der Steifigkeit des zweiten Kraftfahrzeugs angenähert.

Dies hat den Vorteil, dass bei verringerten Unterschieden in der Steifigkeit zwischen Kraftfahrzeugen beispielsweise eine gleiche oder ähnliche Fahrwerksauslegung verwendet werden kann. Ferner können hierdurch Eigenschwingungen des ersten Kraftfahrzeugs und des zweiten Kraftfahrzeugs in einem aneinander angenäherten, insbesondere auch einem gleichen oder ähnlichen, Bereich liegen, so dass Unterschiede von Geräuschen und Schwingungen zwischen dem ersten Kraftfahrzeug und dem zweiten Kraftfahrzeug verringert sind. Insgesamt kann also durch die vorliegende Erfindung der Fahrkomfort des ersten Kraftfahrzeugs an den Fahrkomfort des zweiten Kraftfahrzeugs angenähert werden, ohne hierdurch größere konstruktive oder regelungstechnische Maßnahmen ergreifen zu müssen. Erfindungsgemäß können also durch eine einfache Maßnahme, wie der Art der Verklebung bzw. dem Unterschied zwischen der Verklebung des ersten Strukturelements und der Verklebung des zweiten Strukturelements, leicht Steifigkeitsunterschiede zwischen dem ersten und dem zweiten Fahrzeug ausgeglichen bzw. verringert werden. Es kann damit durch eine einfache Maßnahme auf ungewünscht hohe Steifigkeitsunterschiede innerhalb einer Gruppe von Kraftfahrzeugen reagiert werden.

Gemäß der vorliegenden Erfindung unterscheidet sich die Steifigkeit des ersten Kraftfahrzeug ohne dem angeklebten ersten Strukturelement von der Steifigkeit des zweiten Kraftfahrzeugs ohne dem angeklebten zweiten Strukturelement, weil sich zum Beispiel das erste Kraftfahrzeug von dem zweiten Kraftfahrzeug durch ein die Steifigkeit, insbesondere die Fahrzeuggesamtsteifigkeit, bestimmendes Element unterscheidet.

Die sich unterscheidenden, die Steifigkeit des Kraftfahrzeugs bestimmenden Elemente des ersten und des zweiten Kraftfahrzeugs können auch das erste Strukturelement und das zweite Strukturelement selbst sein.

Somit kann ein steifigkeitsrelevanter Unterschied zwischen dem ersten Strukturelement und dem zweiten Strukturelement durch die Art der Verklebung verringert sein.

Durch die vorliegende Erfindung kann der Unterschied durch das die Steifigkeit bestimmende oder beeinflussende Element zwischen dem ersten Kraftfahrzeug und dem zweiten Kraftfahrzeug ausgeglichen sein.

Vorteilhaft ist gemäß der vorliegenden Erfindung das erste Strukturelement eine Fahrzeugscheibe und ist das zweite Strukturelement eine Fahrzeugscheibe. Die Fahrzeugscheibe kann insbesondere eine Frontscheibe sein.

Alternativ kann gemäß der vorliegenden Erfindung das erste Strukturelement ein Dachelement sein und kann das zweite Strukturelement ein Dachelement sein. Ein Dachelement kann z.B. ein Dachflächenelement sein, das zwischen einem linken Dachrahmen und einem rechten Dachrahmen eingesetzt ist.

Sowohl die Fahrzeugscheibe als auch das Dachelement sind Elemente mit einem erheblichen Einfluss auf die Steifigkeit des Kraftfahrzeugs, wenn sie in der Fahrzeugkarosserie verklebt sind. Daher hat auch die Art der Verklebung der Fahrzeugscheibe oder des Dachelements dabei einen Einfluss auf die Steifigkeit des Kraftfahrzeugs insgesamt und somit kann durch die Art der Verklebung, die an dem ersten Kraftfahrzeug und dem zweiten Kraftfahrzeug unterschiedlich ausgeführt ist, der Unterschied zwischen der Gesamtsteifigkeit des ersten Kraftfahrzeugs und der Gesamtsteifigkeit des zweiten Kraftfahrzeugs verringert werden.

Weiterhin ist gemäß der vorliegenden Erfindung, so wie sie vorstehend mit ihren Weiterbildungen beschrieben ist, vorteilhaft der Unterschied zwischen der Steifigkeit des ersten Kraftfahrzeugs und der Steifigkeit des zweiten Kraftfahrzeugs minimiert oder es ist im Wesentlichen kein Unterschied zwischen der Steifigkeit des ersten Kraftfahrzeugs und der Steifigkeit des zweiten Kraftfahrzeugs vorhanden. Ein minimierter Unterschied bzw. ein im Wesentlichen nicht vorhandener Unterschied bezieht sich darauf, dass ein ggf. theoretisch noch vorhandener Unterschied keinen für den Fahrzeugfahrer oder Fahrzeuginsassen spürbaren Unterschied darstellt. Zum Beispiel spürt der Fahrer dann keinen Unterschied im Fahrverhalten bei gleicher Fahrwerksauslegung des ersten Kraftfahrzeugs und des zweiten Kraftfahrzeugs.

Im Folgenden sind nun Weiterbildungen hinsichtlich des Unterschiedes der Art der Verklebung dargelegt.

Vorteilhaft ist gemäß der vorstehend beschriebenen Erfindung der Unterschied der Verklebung des ersten Strukturelements und des zweiten Strukturelements durch eine unterschiedliche Klebemittelmenge ausgebildet. Beispielsweise könnte bei dem ersten Kraftfahrzeug mehr Klebemittel als bei dem zweiten Kraftfahrzeug verwendet sein.

Ferner kann der Unterschied der Verklebung durch eine unterschiedliche Klebemittelverteilung ausgebildet sein. Es könnte beispielsweise, im Vergleich zu dem zweiten Kraftfahrzeug, bei dem ersten Kraftfahrzeug an bestimmten Stellen weniger oder gar kein Klebemittel und andererseits an anderen bestimmten Stellen mehr Klebemittel verwendet sein.

Weiterhin kann der Unterschied der Verklebung durch eine unterschiedliche Klebemittelform ausgebildet sein. Es könnte insbesondere, im Vergleich zu dem zweiten Kraftfahrzeug, eine unterschiedliche Kleberaupengeometrie, d.h. zum Beispiel eine höhere oder breitere Kleberaupe oder eine sich im Querschnitt anderweitig unterscheidende Kleberaupe, ausgebildet sein.

Weiterhin kann zur Ausbildung des Unterschieds der Verklebung eine unterschiedliche Art eines Klebemittels verwendet sein. Zum Beispiel könnte, im Vergleich zu dem zweiten Kraftfahrzeug, bei dem ersten Kraftfahrzeug ein weniger elastisches Klebemittel oder ein härteres Klebemittel verwendet werden.

Weiterhin kann der Unterschied der Verklebung durch ein Klebemittel ausgebildet sein, das unterschiedliche physikalische Eigenschaften hat.

Die vorstehend aufgezählten Möglichkeiten, um zwischen dem ersten Kraftfahrzeug und dem zweiten Kraftfahrzeug eine unterschiedliche Verklebung auszubilden, können selbstverständlich beliebig miteinander kombiniert werden.

Diese Möglichkeiten lassen sich bei einem automatisierten Klebstoffauftrag leicht verwirklichen. Dies bedeutet, dass zum Beispiel Unterschiede zwischen Kraftfahrzeugsteifigkeiten während der Kraftfahrzeugherstellung verringert werden können, ohne dass weitergehende konstruktive Veränderungen vorgenommen werden müssen.

Bevorzugt ist die Erfindung auf den Fall anwendbar, in dem das erste Kraftfahrzeug und das zweite Kraftfahrzeug eine gleiche Karosserieform, jedoch unterschiedliche Ausstattungen aufweisen.

Eine gleiche Karosserieform kann bedeuten, dass ein erstes Kraftfahrzeug und ein zweitens Kraftfahrzeug der gleichen Baureihe beide ein Stufenheck aufweisen. Alternativ können ein erstes Kraftfahrzeug und ein zweites Kraftfahrzeug der gleichen Baureihe ein sogenanntes Fließheck aufweisen. Alternativ können das erste Kraftfahrzeug und das zweite Kraftfahrzeug mit gleicher Karosserieform ein Kraftfahrzeug der gleichen Baureihe mit Steilheck sein.

Bevorzugt kann eine unterschiedliche Ausstattung, d.h. Ausstattungsvarianten, des ersten Kraftfahrzeugs und des zweiten Kraftfahrzeugs bedeuten, dass das erste Kraftfahrzeug und das zweite Kraftfahrzeug ein unterschiedliches Dach haben. Insbesondere kann das erste Kraftfahrzeug ein durchgehendes Dach aufweisen, während das zweite Kraftfahrzeug ein Dach mit einem Schiebedach oder Panoramadach hat. Alternativ kann das erste Kraftfahrzeug ein Dach mit einem Schiebedach aufweisen und kann das zweite Kraftfahrzeug ein Panoramadach aufweisen. Weiterhin kann sich das Dach des ersten Kraftfahrzeugs hinsichtlich eines Werkstoffes vom dem Dach des zweiten Kraftfahrzeugs unterscheiden. Zum Beispiel kann das erste Kraftfahrzeug ein Dach aus einem metallischen Werkstoff aufweisen, während das zweite Kraftfahrzeug ein Dach aus einem faserverstärkten Kunststoff aufweist.

Alternativ kann die unterschiedliche Ausstattung auch ein Fahrwerk, einen Antrieb, eine Motorisierung oder anderes betreffen. Insbesondere ist jede unterschiedliche Ausstattung relevant, die einen spürbaren Einfluss auf eine Gesamtkraftfahrzeugsteifigkeit und ein Gesamtfahrzeugschwingungsverhalten hat.

Gemäß der vorstehend beschriebenen Erfindung kann das erste Strukturelement eine gleiche äußere Form wie das zweite Strukturelement aufweisen.

Im Falle einer Frontscheibe als erstes und zweites Strukturelement kann also die im Wesentlichen gleiche Frontscheibe an das erste Kraftfahrzeug wie an das zweite Kraftfahrzeug geklebt sein. Dabei kann sich die Frontscheibe in bestimmten anderen Eigenschaften zwischen dem ersten Kraftfahrzeug und dem zweiten Kraftfahrzeug unterscheiden. Als Beispiel seien hier eine Tönung der Scheibe oder bestimmte Ausstattungsvarianten genannt, die an der Scheibe befestigt sind, wie beispielsweise eine Kamera.

Weiterhin können das erste Strukturelement und das zweite Strukturelement gemäß der vorliegenden Erfindung im Wesentlichen identisch sein.

Weiterhin hat gemäß der vorliegenden Erfindung ein Verfahren zum Herstellen eines Kraftfahrzeugs, das eine Karosserie mit einem festverklebten Strukturelement aufweist, zumindest folgende Schritte:
- Bestimmen einer Sollsteifigkeit des Kraftfahrzeugs,
- Auftragen von Klebemittel für ein Ankleben des Strukturelements an einen Karosserieflansch in Abhängigkeit von der Sollsteifigkeit des Kraftfahrzeugs, und
- Kleben des Strukturelements an die Karosserie.

Es wird also zunächst festgestellt, welche Sollsteifigkeit das Kraftfahrzeug aufweisen soll, wenn das Kraftfahrzeug vollständig hergestellt sein wird. Die Sollsteifigkeit des Kraftfahrzeugs ist die gewünschte Steifigkeit des Kraftfahrzeugs nach dessen Herstellung. Dann wird abhängig von der Sollsteifigkeit das Klebemittel zum Ankleben des Strukturelements an einen Karosserieflansch aufgetragen, so dass nach dem Ankleben des Strukturelements an die Karosserie und einem vollständigen Herstellen des Kraftfahrzeugs die Sollsteifigkeit erreicht wird.

Gemäß einer zweiten Alternative wird gemäß der vorliegenden Erfindung vorstehende Aufgabe durch ein Verfahren zum Herstellen eines Kraftfahrzeugs, dass eine Karosserie mit einem festverklebten Strukturelement aufweist, mit den Schritten gelöst:
- Erfassen einer Ausstattungsvariante des Kraftfahrzeugs,
- Auftragen von Klebemittel für ein Ankleben des Strukturelements an dem Kraftfahrzeug in Abhängigkeit von einer Ausstattungsvariante des Kraftfahrzeugs und
- Kleben des Strukturelements an die Karosserie.

Es wird also bei dem Herstellen des Kraftfahrzeugs festgestellt, welche Ausstattungsvariante das Kraftfahrzeug aufweist. Dann wird abhängig von der Ausstattungsvariante des Kraftfahrzeugs Klebemittel aufgetragen.

Gemäß einer dritten Alternative umfasst ein Verfahren zum Herstellen eines Kraftfahrzeugs gemäß der vorliegenden Erfindung, das eine Karosserie mit einem festverklebten Strukturelement aufweist, die Schritte:
- Erfassen einer Ausstattungsvariante des Kraftfahrzeugs,
- Bestimmen einer Sollsteifigkeit des Kraftfahrzeugs,
- Auftragen von Klebemittel für ein Ankleben des Strukturelements an die Karosserie in Abhängigkeit von der Ausstattungsvariante des Kraftfahrzeugs zum Erreichen der Sollsteifigkeit des Kraftfahrzeugs und
- Kleben des Strukturelements an die Karosserie.

Diese dritte Alternative für ein Verfahren zum Herstellen eines Kraftfahrzeugs ist demnach eine Kombination aus dem zuerst genannten Verfahren zum Herstellen eines Kraftfahrzeugs und der zweiten Alternative zum Herstellen eines Kraftfahrzeugs.

Bei den vorstehend genannten Verfahren gemäß der vorliegenden Erfindung kann der Schritt "Auftragen von Klebemittel" durch eine Veränderung einer Menge des Klebemittels durchgeführt werden.

Ferner kann der Schritt "Auftragen von Klebemittel" durch Veränderung einer Verteilung des Klebemittels durchgeführt werden.

Weiterhin kann der Schritt "Auftragen von Klebemittel" durch Veränderung einer Form des Klebemittels, insbesondere einer Geometrie einer Kleberaupe bestehend aus dem Klebemittel, durchgeführt werden.

Weiterhin kann der Schritt "Auftragen von Klebemittel" durch Veränderung einer Art des Klebemittels durchgeführt werden.

Ferner kann der Schritt "Auftragen von Klebemittel" durch Veränderung von Klebebedingungen, insbesondere von Aushärtebedingungen des Klebemittels, durchgeführt werden.

Die genannten Möglichkeiten, um Klebemittel aufzutragen, können auch geeignet miteinander kombiniert werden.

Bei den vorstehend beschriebenen Verfahren gemäß der vorliegenden Erfindung kann sich die Ausstattungsvariante des Kraftfahrzeugs auf ein die Steifigkeit des Kraftfahrzeugs bestimmendes Element, insbesondere eine Art eines Dachs des Kraftfahrzeugs, beziehen.

Bei dem Schritt "Auftragen von Klebemittel" wird das Klebemittel vorteilhaft auf das Strukturelement oder/und auf einen Karosserieflansch des Kraftfahrzeugs aufgetragen.

Bevorzugt ist das Strukturelement eine Fahrzeugscheibe, insbesondere eine Frontscheibe oder ein Dachelement.

Nachstehend erfolgt eine detaillierte Beschreibung eines Ausführungsbeispiels der vorliegenden Erfindung.

Gemäß dem Ausführungsbeispiel der vorliegenden Erfindung gehört eine Gruppe von Kraftfahrzeugen einer gleichen Baureihe, insbesondere mit einer gleichen Karosserieform, wie z.B. einem Kraftfahrzeug mit Stufenheck, an.

Die Kraftfahrzeuge der gleichen Baureihe mit gleicher Karosserieform werden mit unterschiedlichen Ausstattungsvarianten angeboten. Insbesondere werden die Kraftfahrzeuge mit unterschiedlichen Dächern angeboten, z.B. ein Dach aus Stahlblech oder Aluminium, ein Dach aus Stahlblech oder Aluminium mit einem

Schiebedach, ein Dach mit sogenanntem Panoramadach, das im Wesentlichen aus Glas besteht, und ein Dach aus kohlefaserverstärktem Kunststoff für eine sportliche Variante des Kraftfahrzeugs. Die unterschiedlichen Dächer haben einen großen Einfluss auf die Steifigkeit des Kraftfahrzeugs, insbesondere dessen Torsionssteifigkeit.

Mit anderen Worten, würden keine Gegenmaßnahmen ergriffen und würden die Kraftfahrzeuge mit den oben genannten unterschiedlichen Dächern über diesen Unterschied hinaus gehend keine für eine Steifigkeit des Gesamtkraftfahrzeugs wesentlichen Unterschiede aufweisen, so würden sich die Steifigkeiten jener Kraftfahrzeuge mit den unterschiedlichen Dächern unterscheiden.

Dies hat jedoch einen ungewünschten Einfluss auf das Fahrverhalten und auch auf eine Geräuschentwicklung und Schwingungen, so dass jeweils eine angepasste Fahrwerksabstimmung notwendig wäre, wenn ein gewünschter Komfort für die Kraftfahrzeuginsassen nicht beeinflusst werden soll.

Gemäß dem Ausführungsbeispiel wird hierbei als Gegenmaßnahme gegenüber einer ungewünschten Komfortveränderung vorgeschlagen, je nach Dachvariante eine Frontscheibe, die ein erfindungsgemäßes Strukturelement bildet, auf eine andere Art und Weise an einen Karosserieflansch zu kleben.

Beispielsweise hat gemäß dem Ausführungsbeispiel ein erstes Kraftfahrzeug ein durchgehendes Stahlblechdach und ein zweites Kraftfahrzeug ein Stahlblechdach mit Schiebedach.

Die Frontscheibe des ersten Kraftfahrzeugs hat die gleiche Abmessung wie die Frontscheibe des zweiten Kraftfahrzeugs. Ebenso ist der Karosserieflansch des ersten Kraftfahrzeugs gleich dem Karosserieflansch des zweiten Kraftfahrzeugs ausgebildet.

Insbesondere ist bei dem ersten Kraftfahrzeug mit dem durchgehenden Stahlblechdach eine bestimmte Menge an Klebemittel bei einem bestimmten Abstand zwischen dem Karosserieflansch und der Frontscheibe verwendet. Ferner ist bei dem zweiten Kraftfahrzeug mit Schiebedach eine größere Menge an Klebemittel bei dem gleichen bestimmten Abstand zwischen dem Karosserieflansch und der Frontscheibe verwendet. Damit ist die Verklebung der Frontscheibe des zweiten Kraftfahrzeugs steifer als die Verklebung der Frontscheibe des ersten Kraftfahrzeugs. Insbesondere ist die Menge an Klebemittel bei dem ersten Kraftfahrzeug und die Menge an Klebemittel bei dem zweiten Kraftfahrzeug so gewählt, dass die Steifigkeit des ersten Kraftfahrzeugs ungefähr der Steifigkeit des zweiten Kraftfahrzeugs entspricht.

Die durch das Schiebedach bewirkte Steifigkeitseinbuße des zweiten Kraftfahrzeugs wird also gemäß dem ersten Ausführungsbeispiel vorteilhaft durch eine größere Klebemittelmenge bei gleichzeitig gleichem Abstand zwischen dem Karosserieflansch und der Fahrzeugscheibe ausgeglichen.

Hierdurch sind vorteilhaft keine weiteren konstruktiven oder regelungstechnischen Maßnahmen am Fahrwerk des ersten bzw. des zweiten Kraftfahrzeugs notwendig.

Bei einem Herstellen der Kraftfahrzeuge gemäß dem ersten Ausführungsbeispiel wird in der Fertigungslinie erfasst, welche Ausstattungsvariante das Kraftfahrzeug, an das die Frontscheibe zu kleben ist, aufweist. Abhängig von der Ausstattungsvariante trägt ein Klebemittelroboter dann die bestimmte Klebemittelmenge auf.

## Patentansprüche

1. Gruppe von Kraftfahrzeugen bestehend aus einem ersten Kraftfahrzeug, das eine erste Karosserie mit einem angeklebten ersten Strukturelement aufweist, und einem zweiten Kraftfahrzeug, das eine zweite Karosserie mit einem angeklebten zweiten Strukturelement aufweist, wobei sich die Steifigkeit des ersten Kraftfahrzeugs ohne dem angeklebten ersten Strukturelement von der Steifigkeit des zweiten Kraftfahrzeugs ohne dem angeklebten zweiten Strukturelement unterscheidet, **dadurch gekennzeichnet, dass** eine Verklebung des ersten Strukturelements derart unterschiedlich zu einer Verklebung des zweiten Strukturelements ausgeführt ist, dass ein Unterschied zwischen der Steifigkeit des ersten Kraftfahrzeugs und der Steifigkeit des zweiten Kraftfahrzeugs verringert ist.

2. Gruppe von Kraftfahrzeugen nach Patentanspruch 1, wobei das erste Strukturelement und das zweite Strukturelement eine Fahrzeugscheibe, insbesondere eine Frontscheibe, oder ein Dachelement sind.

3. Gruppe von Kraftfahrzeugen nach Patentanspruch 1 oder 2, wobei der Unterschied zwischen der Steifigkeit des ersten Kraftfahrzeugs und der Steifigkeit des zweiten Kraftfahrzeugs minimiert ist oder im Wesentlichen kein Unterschied zwischen der Steifigkeit des ersten Kraftfahrzeugs und der Steifigkeit des zweiten Kraftfahrzeugs vorhanden ist.

4. Gruppe von Kraftfahrzeugen nach einem der Patentansprüche 1 bis 3, wobei der Unterschied der Verklebung des ersten Strukturelements und des zweiten Strukturelements durch eine unterschiedliche Klebemittelmenge, eine unterschiedliche Klebemittelverteilung, eine unterschiedliche Klebemittelform, insbesondere eine unterschiedliche Kleberaupengeometrie, eine unterschiedliche Art eines Klebemittels und/oder unterschiedliche physikalische Eigenschaften eines Klebemittels ausgebildet ist.

5. Gruppe von Kraftfahrzeugen nach einem der Patentansprüche 1 bis 4, wobei des erste Kraftfahrzeug und das zweite Kraftfahrzeug eine gleiche Karosserieform aber unterschiedliche Ausstattungen aufweisen.

6. Gruppe von Kraftfahrzeugen nach Patentanspruch 5, wobei das erste Kraftfahrzeug und das zweiten Kraftfahrzeug unterschiedliche Dächer aufweisen.

7. Gruppe von Kraftfahrzeugen nach einem der Patentansprüche 1 bis 6, wobei das erste Strukturelement und das zweite Strukturelement die gleiche äußere Form aufweisen.

8. Verfahren zum Herstellen eine Kraftfahrzeugs, das eine Karosserie mit einem fest verklebten Strukturelement aufweist, mit den Schritten,
- Bestimmen einer Soll-Steifigkeit des Kraftfahrzeugs,
- Auftragen von Klebemittel für ein Ankleben des Strukturelements an einen Karosserieflansch in Abhängigkeit von der Soll-Steifigkeit des Kraftfahrzeugs, und
- Kleben des Strukturelements an die Karosserie.

9. Verfahren zum Herstellen eine Kraftfahrzeugs, das eine Karosserie mit einem fest verklebten Strukturelement aufweist, mit den Schritten,
- Erfassen einer Ausstattungsvariante des Kraftfahrzeugs,
- Auftragen von Klebemittel für ein Ankleben des Strukturelements an dem Kraftfahrzeug in Abhängigkeit von der Ausstattungsvariante des Kraftfahrzeugs, und
- Kleben des Strukturelements an die Karosserie.

10. Verfahren zum Herstellen eine Kraftfahrzeugs, das eine Karosserie mit einem fest verklebten Strukturelement aufweist, mit den Schritten,
- Erfassen einer Ausstattungsvariante des Kraftfahrzeugs,
- Bestimmen einer Soll-Steifigkeit des Kraftfahrzeugs,
- Auftragen von Klebemittel für ein Ankleben das Strukturelements an die Karosserie in Abhängigkeit von der Ausstattungsvariante des Kraftfahrzeugs zum Erreichen der Soll-Steifigkeit des Kraftfahrzeugs, und
- Kleben des Strukturelements an die Karosserie.

11. Verfahren nach Anspruch 8, 9 oder 10, wobei der Schritt Auftragen von Klebemittel durch Veränderung einer Menge des Klebemittels, durch Veränderung einer Verteilung des Klebemittels, durch Veränderung einer Form des Klebemittels, insbesondere einer Geometrie einer Kleberaupe bestehend aus dem Klebemittel, durch Veränderung einer Art des Klebemittels und/oder durch Veränderung von Klebebedingungen, insbesondere von Aushärtebedingungen des Klebemittels, durchgeführt wird.

12. Verfahren nach einem der Patentansprüche 8 bis 10, wobei die Ausstattungsvariante des Kraftfahrzeugs ein eine Steifigkeit des Kraftfahrzeugs bestimmendes Element betrifft.

## Claims

1. A group of motor vehicles consisting of a first motor vehicle which has a first body with an affixed first structural element, and a second motor vehicle which has a second body with an affixed second structural element, wherein the rigidity of the first motor vehicle without the affixed first structural element differs from the rigidity of the second motor vehicle without the affixed second structural element, **characterised in that** an adhesive bonding of the first structural element is configured to differ from an adhesive bonding of the second structural element such that a difference between the rigidity of the first motor vehicle and the rigidity of the second motor vehicle is reduced.

2. A group of motor vehicles according to claim 1, wherein the first structural element and the second structural element are a vehicle pane, especially a windscreen or a roof element.

3. A group of motor vehicles according to claim 1 or claim 2, wherein the difference between the rigidity of the first motor vehicle and the rigidity of the second motor vehicle is minimised or there is substantially no difference between the rigidity of the first motor vehicle and the rigidity of the second motor vehicle.

4. A group of motor vehicles according to any of claims 1 to 3, wherein the difference in the adhesive bonding of the first structural element and of the second structural element is provided by a different amount of adhesive, by a different distribution of adhesive, by a different form of adhesive, especially a different shape of the adhesive bead, by a different type of adhesive and/or by different physical properties of an adhesive.

5. A group of motor vehicles according to any of claims 1 to 4, wherein the first motor vehicle and the second motor vehicle have the same body form but different equipment.

6. A group of motor vehicles according to claim 5, wherein the first motor vehicle and the second motor vehicle have different roofs.

7. A group of motor vehicles according to any of claims 1 to 6, wherein the first structural element and the second structural element have the same external form.

8. A method for producing a motor vehicle which has a body with a firmly bonded structural element, comprising the steps:
- determining a desired rigidity of the motor vehicle,
- applying adhesive for affixing the structural element to a flange of the body, subject to the desired rigidity of the motor vehicle, and
- adhesively bonding the structural element to the body.

9. A method for producing a motor vehicle which has a body with a firmly bonded structural element, comprising the steps:
- identifying an equipment variant of the motor vehicle,
- applying adhesive for affixing the structural element to the motor vehicle, subject to the equipment variant of the motor vehicle, and
- adhesively bonding the structural element to the body.

10. A method for producing a motor vehicle which has a body with a firmly bonded structural element, comprising the steps:
- identifying an equipment variant of the motor vehicle,
- determining a desired rigidity of the motor vehicle,
- applying adhesive for affixing the structural element to the body, subject to the equipment variant of the motor vehicle to achieve the desired rigidity of the motor vehicle, and
- adhesively bonding the structural element to the body.

11. A method according to claim 8, 9 or claim 10, wherein the step of applying adhesive is carried out by varying the amount of adhesive, by varying the distribution of adhesive, by varying the form of adhesive, especially the shape of an adhesive bead comprising the adhesive, by varying the type of adhesive and/or by varying adhesion conditions, in particular curing conditions of the adhesive.

12. A method according to any of claims 8 to 10, wherein the equipment variant of the motor vehicle relates to an element which determines a rigidity of the motor vehicle.

## Revendications

1. Groupe de véhicules constitué d'un premier véhicule ayant une première carrosserie sur laquelle est collé un premier élément de structure et un second véhicule ayant une seconde carrosserie sur laquelle est collé un second élément de structure, la rigidité du premier véhicule sans le premier élément de structure collé étant différente de la rigidité du second véhicule sans le second élément de structure collé, **caractérisé en ce que**
le collage du premier élément de structure est effectué différemment du collage du second élément de structure de façon à diminuer la différence entre la rigidité du premier véhicule et la rigidité du second véhicule.

2. Groupe de véhicules conforme à la revendication 1,
dans lequel le premier élément de structure et le second élément de structure sont une vitre de véhicule, en particulier un pare-brise ou un élément de toit.

3. Groupe de véhicules conforme à la revendication 1 ou 2,
dans lequel la différence entre la rigidité du premier véhicule et la rigidité du second véhicule est minimalisée ou, il n'y a essentiellement aucune différence entre la rigidité du premier véhicule et la rigidité du second véhicule.

4. Groupe de véhicules conforme à l'une des revendications 1 à 3, dans lequel la différence de collage du premier élément de structure et du second élément de structure est obtenue par une quantité de colle différente, une répartition différente de la colle, une forme différente de la colle, en particulier une géométrie différente du boudin de colle, un type de colle différent et/ou des propriétés physiques différentes de la colle.

5. Groupe de véhicules conforme à l'une des revendications 1 à 4, dans lequel le premier véhicule et le second véhicule ont une forme de carrosserie similaire mais des équipements différents.

6. Groupe de véhicules conforme à la revendication 5,
dans lequel le premier véhicule et le second véhicule ont des toits différents.

7. Groupe de véhicules conforme à l'une des revendications 1 à 6, dans lequel le premier élément de structure et le second élément de structure ont la même forme extérieure.

8. Procédé de fabrication d'un véhicule ayant une carrosserie sur laquelle est collé fermement un élément de structure, comprenant des étapes consistant à :
- déterminer une rigidité de consigne du véhicule,
- appliquer une colle pour permettre de coller l'élément de structure sur une bride de la carrosserie en fonction de la rigidité de consigne du véhicule, et
- coller l'élément de structure sur la carrosserie.

9. Procédé de fabrication d'un véhicule ayant une carrosserie sur laquelle est collé fermement un élément de structure comprenant des étapes consistant à :
- détecter une variante d'équipement du véhicule,
- appliquer une colle pour permettre de coller l'élément de structure sur le véhicule en fonction de la variante d'équipement du véhicule, et
- coller l'élément de structure sur la carrosserie.

10. Procédé de fabrication d'un véhicule ayant une carrosserie sur laquelle est collé fermement un élément de structure, comprenant des étapes consistant à :
- détecter une variante d'équipement du véhicule,
- déterminer une rigidité de consigne du véhicule,
- appliquer une colle pour permettre de coller l'élément de structure sur la carrosserie en fonction de la variante d'équipement du véhicule de façon à atteindre la rigidité de consigne du véhicule, et
- coller l'élément de structure sur la carrosserie.

11. Procédé conforme à la revendication 8, 9 ou 10,
selon lequel l'étape consistant à appliquer une colle est mise en oeuvre en modifiant la quantité de colle, en modifiant la répartition de la colle, en modifiant la forme de la colle, en particulier la géométrie d'un boudin de colle, en modifiant le type de colle et/ou en modifiant les conditions de collage, en particulier les conditions de durcissement de la colle.

12. Procédé conforme à l'une des revendications 8 à 10,
selon lequel la variante d'équipement du véhicule concerne un élément déterminant la rigidité du véhicule.
